# FASCICULE DE BREVET EUROPEEN

(11) **EP 0 672 805 B1**
(45) Date de publication et mention de la délivrance du brevet: **23.12.1998**
(21) Numéro de dépôt: 94490009.1
(22) Date de dépôt: 17.03.1994
(51) Int. Cl.: E04C 2/20, B32B 7/08

(54) **Panneau constitué d'au moins trois éléments sensiblement plats**
Platte bestehend aus zumindest drei flachen Elementen
Panel consisting of at least three flat elements

(43) Date de publication de la demande: 20.09.1995
(73) Titulaire: Maquet, Joseph, 59240 Dunkerque (FR)
(72) Inventeur: Maquet, Joseph, 59240 Dunkerque (FR)
(74) Mandataire: Ecrepont, Robert

(56) Documents cités:
- WO-A-80/02253
- DE-A- 2 236 479
- LU-A- 77 526

## Description

L'invention se rapporte à un panneau constitué par assemblage d'au moins trois éléments sensiblement plats, dont un élément dit "âme centrale" et deux éléments qui, dits "peaux", sont chacun au moins indirectement appliqués contre l'une des faces de la dite âme centrale.

Par éléments sensiblement plats, on comprendra des éléments qui sont de faible épaisseur par rapport à au moins une de ses dimensions longitudinale et transversale mais ne sont pas limitativement plans.

On considèrera que ces éléments plats sont d'enveloppe quelconque.

L'invention se rapporte également à un procédé de fabrication de tels panneaux.

L'invention intéresse plus particulièrement la fabrication de panneaux à faible masse surfacique et à caractéristiques mécaniques élevées.

L'invention intéresse spécialement la fabrication de panneaux du type précité dont, d'une part, l'élément dit âme centrale est en matériau à faible densité tel de la mousse et, d'autre part, les éléments dits peaux sont en matériau stratifié constitué de nappes de fibres et d'un liant, durcissable.

Dans ce domaine, on connaît (WO-A-8O/O2253) un panneau constitué par assemblage de différentes parties entre elles au moyen d'un liant durcissable se présentant à l'état sensiblement fluide au moins à un moment donné de l'assemblage des dites pièces, ces pièces comprenant :
- au moins trois éléments sensiblement plats dont un élément dit âme centrale, en mousse à cellules ouvertes, comportant deux faces opposées qui déterminent son épaisseur et deux éléments dits peaux présentant eux-mêmes deux faces opposées déterminant leur épaisseur, ces éléments plats dits peaux étant chacun appliqué au moins indirectement contre l'une des faces de l'âme centrale, et
- au moins deux groupes d'au moins un organe longiligne qui, en vue de réaliser entre les éléments de peau une structure mécanique, traversent au moins pour certains l'ensemble des éléments plats.

Les caractéristiques de ce type de panneau sont reconnues et appréciées mais, un résultat que l'invention vise à obtenir est un panneau du type précité dont les caractéristiques mécaniques, notamment la résistance à la flexion, sont notablement accrues nonobstant le fait que la masse surfacique du panneau est, quant à elle, réduite.

D'autres résultats de l'invention apparaitront dans la description qui suit.

L'invention a donc pour objet un panneau du type précité notamment caractérisé en ce que :
- l'élément d'âme est en matériau n'absorbant pas le liant lorsque ce dernier est à l'état sensiblement fluide et,
- d'une part, les organes longilignes présentent chacun, sur chaque face libre d'un élément dit peau, une extrémité dotée au moins d'un moyen d'appui sur la dite face libre et,
- d'autre part, au moins deux de ces organes longilignes ont, en projection dans un plan perpendiculaire aux faces des éléments de peau, leurs axes longitudinaux qui sont sécants entre eux.

Egalement, l'invention a pour objet un procédé de réalisation d'un tel panneau.

Cette invention sera bien comprise à l'aide de la description qui va suivre faite à titre d'exemple non limitatif en regard du dessin ci-annexé qui représente schématiquement :
- figure 1 : une vue partielle et de dessus d'un panneau selon l'invention et en cours de préparation,
- figure 2 : à plus grande échelle, une vue en coupe transversale d'une fraction de panneau selon l'invention et en cours de préparation,
- figure 3 : dans une variation de réalisation, une vue partielle et de dessus d'un panneau selon l'invention et en cours de préparation,
- figure 4 : à plus grande échelle, une vue en coupe transversale d'une fraction du panneau selon la figure 3.

En se reportant au dessin, on voit un panneau 1 constitué par assemblage de différentes parties entre elles au moyen d'un liant durcissable se présentant à l'état sensiblement fluide au moins à un moment donné de l'assemblage des dites pièces, ces pièces comprenant :
- au moins trois éléments 2, 3, 4 sensiblement plats dont un élément 2 dit âme centrale comportant deux faces opposées 5, 6 qui déterminent son épaisseur E1 et deux éléments dits peaux 3, 4 présentant eux-mêmes deux faces opposées 7, 8 et 9, 10 déterminant leur épaisseur E2, E3, ces éléments plats dits peaux étant chacun appliqué au moins indirectement contre l'une des faces 5, 6 de l'âme centrale 2 et,
- au moins deux groupes 11 d'au moins un organe 12 longiligne qui, en vue de réaliser entre les éléments de peau 3, 4 une structure mécanique, traversent au moins pour certains l'ensemble des éléments plats 2 à 4.

Par exemple, au moins l'un des groupes 11 consiste en une série d'organes qui s'étend dans une direction déterminée courbe ou rectiligne.

Le matériau constitutif de l'élément d'âme 2 est de type perforable c'est à dire à même d'être transpercé par un corps fin tel une aiguille.

De manière remarquable :
- l'élément d'âme 2 est en matériau n'absorbant pas le liant lorsque ce dernier est à l'état sensiblement fluide et,
- d'une part, les organes 12 longilignes présentent chacun, sur chaque face libre d'un élément 3 à 4 dit peau, une extrémité 13 dotée au moins d'un moyen 14, 15 d'appui sur la dite face libre et,
- d'autre part, au moins deux de ces organes longilignes ont, en projection dans un plan perpendiculaire aux faces des éléments de peau, leurs axes longitudinaux 12A qui sont sécants entre eux.

De manière également remarquable, les organes longilignes 12 d'au moins deux groupes 11 sont situés chacun dans un plan sensiblement perpendiculaire aux faces opposées 5 à 10 de ses éléments plats 2 à 4 et disposés de manière telle qu'en projection dans un plan médian aux deux groupes considérés, les axes longitudinaux 12A des organes 12 de ces deux groupes 11 apparaissent sécants entre eux.

Dans un mode de réalisation, le matériau de l'âme centrale est une mousse à cellules fermées.

Ces caractéristiques permettent :
- d'une part, de minimiser la masse de liant absorbée par l'âme centrale et donc utilisé pour l'assemblage de différentes parties de panneau et donc la masse totale du dit panneau et,
- d'autre part, de constituer des panneaux de résistance mécanique accrue par rapport à ceux de l'état de la technique.

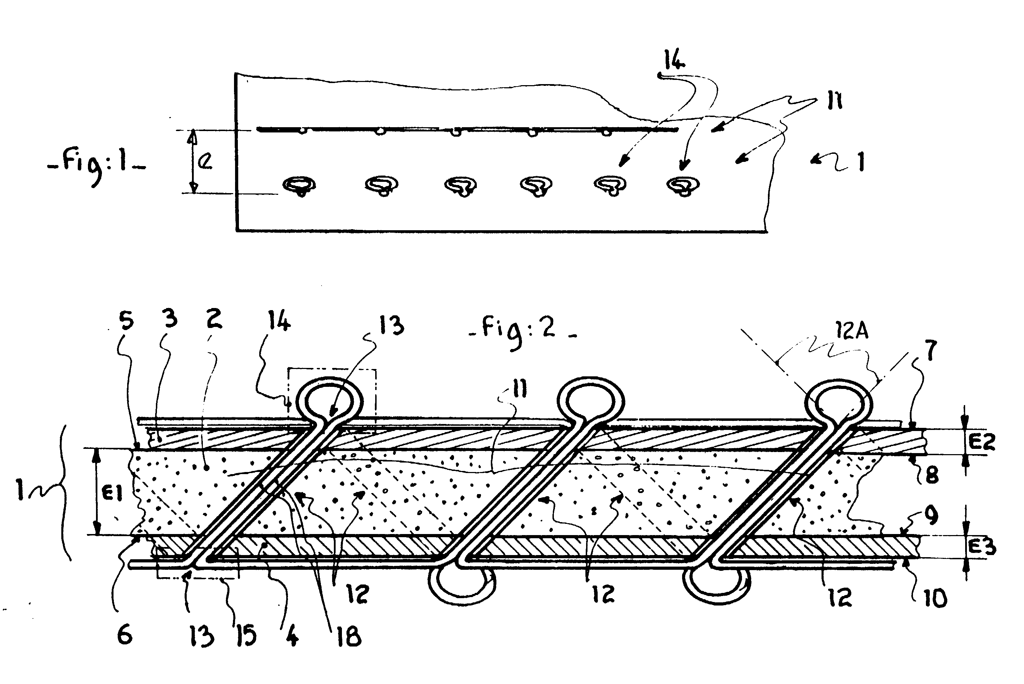

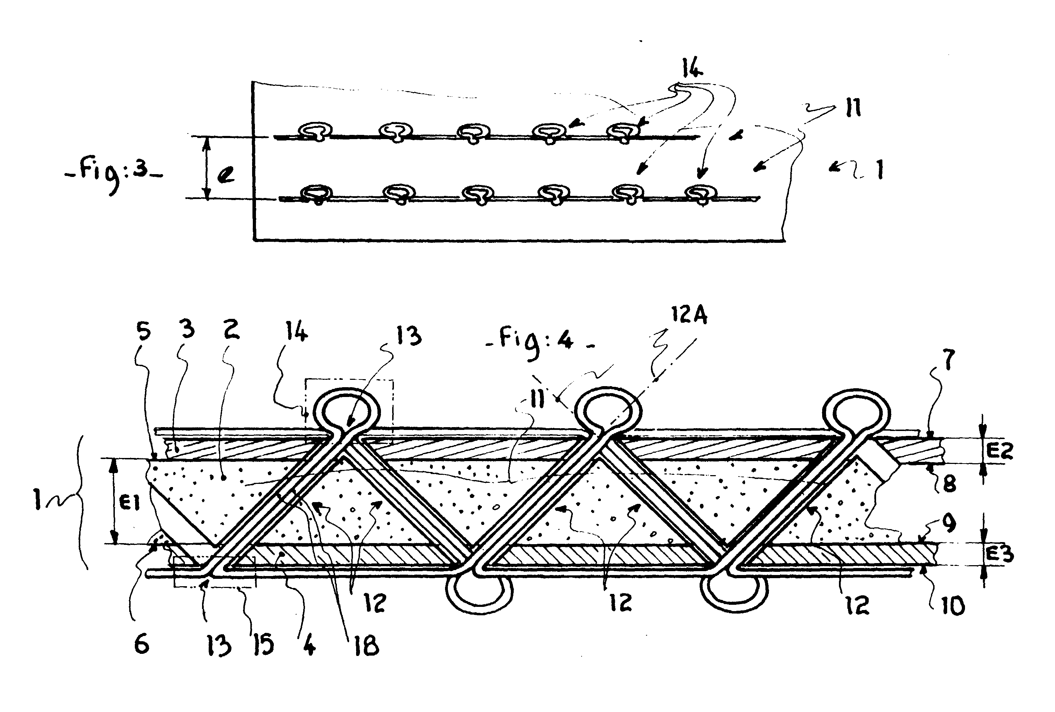

Non limitativement mais tel que cela a été représenté (figures 2 et 4), la structure mécanique est, au moins en projection, de type dit triangulé, c'est à dire avec des extrémités d'organes longilignes qui apparaissent confondues.

Le plan de projection des figures 2 et 4 correspondent à l'un des susdits plans de situation.

L'homme du métier est à même de calculer l'inclinaison des organes longilignes ainsi que leur densité sur un panneau en fonction des caractéristiques mécaniques qu'il souhaite obtenir.

De manière également remarquable :
- d'une part, chaque panneau 1 comprend au moins une pluralité de groupes 11 d'organes 12 obliques dans chacun desquels les organes du groupe considéré sont disposés approximativement selon une même inclinaison et,
- d'autre part, ces groupes sont organisés dans des plans sensiblement parallèles et espacés selon un pas déterminé "e" de manière à disperser les saillies constituées par les différents moyens 14, 15 d'appui d'organes longilignes 12 sur les faces libres des éléments de peau.

Par cela, la création de surépaisseurs locales préjudiciables à l'assemblage dans de bonnes conditions de couches de renfort coiffant les moyens d'appui des éléments de peau est radicalement limitée.

L'homme du métier est à même d'imaginer d'autres dispositions en fonction de la résistance mécanique souhaitée pour le panneau considéré.

De manière remarquable, le matériau constitutif de l'élément d'âme 2 est un matériau épuisable, c'est à dire un matériau dont la cohésion peut être modifiée par un moyen approprié afin qu'il puisse être extrait de l'âme centrale du panneau aprés solidification du liant.

Le matériau du panneau d'âme centrale est, par exemple, liquéfiable ou sublimable.

Par cela, des structures creuses peuvent être constituées.

De manière remarquable, au moins certains des moyens 14, 15 d'appui des extrémités de chaque organe 12 oblique consistent en une butée 14, 15 réalisée par un flanc d'un segment libre de l'organe longiligne 12 qui se présente en vis à vis de la face libre de l'élément dit peau concerné.

Dans une forme préférée de réalisation :
- d'une part, chaque organe 12 est, dans sa partie rectiligne, constitué par au moins une paire de tiges 18 qui s'étendent approximativement l'une contre l'autre et donc parallèlement entre elles, avec chacune des extrémités qui, au niveau de chaque face libre d'un élément dit peau 3, 4 sont voisines et,
- d'autre part, l'un (14) des moyens 14, 15 d'appui sur l'une des faces libres des éléments dits peaux est constitué au moins par le flanc d'un segment courbe de tige qui relie deux extrémités voisines de chaque paire de tiges 18 précitée, tandis que, l'autre moyen 15 d'appui est constitué par les flancs de deux segments sensiblement rectilignes de tige 18 qui prolongent chacun l'une des deux autres extrémités voisines des tiges de la paire considérée et s'étendent contre la face libre de l'élément dit peau concerné.

Par exemple, les moyens d'appui 14, 15 s'étendent approximativement dans le plan à l'intérieur duquel l'organe considéré se trouve, mais, également, ils peuvent s'étendre dans un plan sécant à ce plan.

Avantageusement, au moins certains des organes 12 d'un même groupe 11 sont constitués à partir d'au moins une fibre et, de préférence, d'un faisceau de fibres sensiblement continu et conformé pour réaliser tant les tiges 18 qui forment les organes 12 que les segments courbes 14 et rectilignes 15 constituant les moyens d'appui 14, 15.

Bien que cela ne soit pas représenté :
- d'une part, au moins certains des organes 12 sont imprégnés d'un liant tel une résine thermodurcissable et,
- d'autre part, les éléments dits peaux 3, 4 sont chacun constitués par au moins une nappe de matériau fibreux, laquelle est également imprégnée de liant tel une résine thermodurcissable.

Ce type de panneaux présente de nombreux avantages dont :
- des caractéristiques mécaniques accrues par rapport aux panneaux du genre connu,
- une cohésion entre les différents éléments plats qui est également accrue,
- une facilité de réalisation.

Précisément, pour réaliser un panneau selon l'invention, aprés avoir appliqué une nappe de matériau fibreux, contre chacune des deux faces opposées d'un élément dit âme centrale, on constitue au moins l'un des groupes 11 d'organes longilignes en réalisant successivement chacun des dits organes 12 et à cet effet, depuis au moins l'une des faces libres de l'ensemble constituée par l'élément dit âme centrale et les nappes qu'elle porte :
- on perfore le dit ensemble selon l'inclinaison souhaitée pour l'organe considéré,
- on introduit dans la perforation au moins une fibre qu'on plie de manière à constituer une boucle sur la face de l'ensemble qui est opposée à celle depuis laquelle on réalise la perforation et l'introduction de la fibre puis,
- sans rompre la dite fibre, on reproduit les opérations ci-dessus selon un pas déterminé autant de fois que cela est nécessaire pour constituer tous les organes 12 d'un groupe.

De manière notable, après avoir constitué tous les organes d'au moins un groupe, on enduit les faces libres de l'ensemble ainsi aménagé, d'un liant tel une résine que l'on fait fluer vers l'intérieur du panneau de manière à enduire les organes.

De manière également notable, c'est lors de l'assemblage de tels panneaux avec des plaques et/ou nappes de renfort complémentaires qu'on fait fluer le liant.

De manière remarquable, d'une part, lors de l'assemblage des éléments plats, on utilise un élément d'âme constitué de plusieurs couches de matériaux, et d'autre part, lorsqu'on fait fluer la résine dans les organes longilignes, on la fait également fluer entre les couches de matériaux au moins dans la zone traversée par chaque organe 12.

Cette particularité permet de ceinturer les tiges qui constituent chaque organe longiligne et donc de renforcer sa résistance mécanique au flambage.

De préférence, les opérations de perforation et d'introduction sont réalisées sensiblement simultanément.

De manière également préférentielle, on réalise simultanément une pluralité d'organes 12 orientés selon une même inclinaison et disposés en rangées 11.

Dans au moins certains des groupes 11 d'organes longilignes 12, on fait coïncider sur au moins l'une des faces libres de l'ensemble d'éléments plats, les découpes formées par les perforations destinées au logement d'organes longilignes voisins de manière telle que leurs axes longitudinaux soient sécants au niveau de ladite face.

Par cela, on constitue donc une triangulation au sens mécanique du terme.

De manière remarquable, on verrouille chaque boucle formée sur l'une des faces libres de l'ensemble de l'élément plat en la couchant et en la collant contre ladite face.

L'assemblage des éléments n'est donc verrouillé qu'aprés durcissement du liant.

De manière générale, on verrouille chaque boucle formée sur l'une des faces libres de l'ensemble d'éléments plats en réalisant un relatif verrouillage entre cette boucle et au moins une fibre située au niveau de la dite boucle.

Par expression "relatif verrouillage", on désigne aussi bien une soudure, un noeud qu'un simple entre-croisement de fibres.

Chaque panneau ainsi constitué peut avantageusement être assemblé par juxtaposition avec d'autres panneaux du même type, notamment avant l'assemblage avec les plaques ou nappes complémentaires précédemment évoquées.

On notera que l'assemblage n'est définitif que lorsque le liant s'est solidifié.

La taille des boucles est choisie en fonction de l'appui que l'on souhaite obtenir.

Le point d'appui devient effectif aprés durcissement du liant car il est lié au piégeage de la fibre par le liant durci.

Préalablement au durcissement du liant, on déforme le panneau de manière à lui conférer une forme prédéterminée qu'on maintient jusqu'à durcissement du dit liant.

Ces particularités du procédé permettent de constituer des panneaux de formes autres que planes.

A l'issue du durcissement du liant, on extrait le matériau d'âme en exploitant son caractère dit épuisable.

Cela permet de réaliser des panneaux à trés faible masse surfacique.

Avantageusement, de manière remarquable, après extraction du matériau d'âme, on comble l'espace formé avec un matériau de remplissage.

Cette dernière particularité du procédé permet de réaliser des panneaux dont le matériau d'âme a des propriétés particulières mais ne se prêtant pas à la réalisation du dit panneau.

## Revendications

1. Panneau (1) constitué par assemblage de différentes pièces entre elles au moyen d'un liant durcissable se présentant à l'état sensiblement fluide au moins à un moment donné de l'assemblage des dites pièces, ces pièces comprenant :
- au moins trois éléments (2, 3, 4) sensiblement plats dont un élément (2) dit âme centrale comportant deux faces opposées (5, 6) qui déterminent son épaisseur (E1) et deux éléments dits peaux (3, 4) présentant eux-mêmes deux faces opposées (7, 8 et 9, 10) déterminant leur épaisseur (E2, E3), ces éléments plats dits peaux (3,4) étant chacun appliqué au moins indirectement contre l'une des faces (5, 6) de l'âme centrale (2), et
- au moins deux groupes d'au moins un organe (12) longiligne qui, en vue de réaliser entre les éléments de peau (3, 4) une structure mécanique, traversent au moins pour certains l'ensemble des éléments plats (2 à 4),
ce panneau étant **CARACTERISE** en ce que :
- l'élément d'âme (2) est en matériau n'absorbant pas le liant lorsque ce dernier est à l'état sensiblement fluide et,
- d'une part, les organes (12) longilignes présentent chacun, sur chaque face libre d'un élément (3, 4) dit peau, une extrémité (13) dotée au moins d'un moyen (14, 15) d'appui sur la dite face libre et,
- d'autre part, au moins deux de ces organes longilignes (12) ont, en projection dans un plan perpendiculaire aux faces des éléments de peau (3,4), leurs axes longitudinaux (12A) qui sont sécants entre eux.

2. Panneau selon la revendication 1 dans lequel les organes de chaque groupe constituent une série qui s'étend dans une direction déterminée **caractérisé** en ce que les organes longilignes (12) d'au moins deux groupes (11) sont situés chacun dans un plan sensiblement perpendiculaire aux faces opposées (5 à 10) de ses éléments plats (2 à 4) et disposés de manière telle qu'en projection dans un plan médian aux deux groupes considérés, les axes longitudinaux (12A) des organes (12) de ces deux groupes (11) apparaissent sécants entre eux.

3. Panneau selon l'une des revendications 1 ou 2 **caractérisé** en ce que le matériau constitutif de l'élément d'âme (2) est un matériau épuisable, c'est à dire un matériau dont la cohésion peut être modifiée par un moyen approprié afin qu'il puisse être extrait de l'âme centrale du panneau aprés solidification du liant.

4. Panneau selon l'une quelconque des revendications 1 à 3 **caractérisé** en ce que :
- d'une part, chaque panneau (1) comprend au moins une pluralité de groupes (11) d'organes (12) obliques dans chacun desquels les organes du groupe sont disposés approximativement selon une même inclinaison et,
- d'autre part, ces groupes sont organisés dans des plans sensiblement parallèles et espacés selon un pas déterminé (e) de manière à disperser les saillies constituées par les différents moyens (14, 15) d'appui d'organes longilignes (12) sur les faces libres des éléments de peau.

5. Panneau selon l'une quelconque des revendications 1 à 4 **caractérisé** en ce que :
- au moins certains des organes (12) :
. d'une part, sont constitués à partir d'au moins une fibre sensiblement continue et conformée pour réaliser tant les tiges (18) qui forment les organes (12) que les segments courbes (14) et rectilignes (15) constituant les moyens d'appui (14, 15) et,
. d'autre part, sont imprégnés d'un liant tel une résine thermodurcissable, et
- les éléments dits peaux (3, 4) sont chacun constitués par au moins une nappe de matériau fibreux, laquelle est également imprégnée de liant tel une résine thermodurcissable.

6. Procédé de réalisation d'un panneau selon l'une quelconque des revendications 1 à 5 et selon lequel, après avoir appliqué une nappe de matériau fibreux, contre chacune des deux faces opposées d'un élément dit âme centrale, on constitue au moins l'un des groupes (11) d'organes longilignes en réalisant successivement chacun des dits organes (12) et à cet effet, depuis au moins l'une des faces libres de l'ensemble constituée par l'élément dit âme centrale et les nappes qu'elle porte :
- on perfore le dit ensemble selon l'inclinaison souhaitée pour l'organe considéré,
- on introduit dans la perforation au moins une fibre,
- sans rompre la dite fibre, on reproduit les opérations
- on imprègne les pièces du panneau avec un liant durcissable ci-dessus selon un pas déterminé autant de fois que cela est nécessaire pour constituer ceux des organes (12) d'un groupe,
ce procédé étant **caractérisé** en ce que, lors de l'introduction de la fibre dans chaque perforation, on la plie de manière à constituer une boucle sur la face de l'ensemble des éléments plats qui est opposée à celle depuis laquelle on réalise la perforation et l'introduction de la fibre.

7. Procédé selon la revendication 6 **caractérisé** en ce que, après avoir constitué tous les organes d'au moins un groupe, on enduit les faces libres de l'ensemble ainsi aménagé, d'un liant tel une résine que l'on fait fluer vers l'intérieur du panneau de manière à enduire les organes obliques (12).

8. Procédé selon la revendication 6 ou 7 **caractérisé** en ce qu'on verrouille chaque boucle formée sur l'une des faces libres de l'ensemble d'éléments plats en réalisant un relatif verrouillage entre cette boucle et au moins une fibre située a niveau de la dite boucle.

9. Procédé selon la revendication 7 ou 8 **caractérisé** en ce que, préalablement au durcissement du liant, on déforme le panneau de manière à lui conférer une forme prédéterminée qu'on maintient jusqu'à durcissement du dit liant.

10. Procédé selon l'une quelconque des revendications 7 à 9 **caractérisé** en ce qu'à l'issue du durcissement du liant, on extrait le matériau d'âme en exploitant son caractère dit épuisable.

## Patentansprüche

1. Platte (1), die durch Zusammenfügen verschiedener Teile untereinander mittels eines aushärtbaren Bindemittels gebildet ist, welches sich zumindest zu einem vorgegebenen Augenblick beim Zusammenfügen der Teile in einem im wesentlichen flüssigen Zustand befindet, wobei diese Teile folgendes umfassen:
- mindestens drei im wesentlichen flache Elemente (2, 3, 4), wovon ein Element (2), der sogenannte Mittelkern, zwei gegenüberliegende Flächen (5, 6) aufweist, welche seine Stärke (E1) bestimmen, und zwei sogenannte Außenhautelemente (3, 4), welche ihrerseits zwei gegenüberliegende (7, 8 und 9, 10) und ihre Stärke (E2, E3) bestimmende Flächen aufweisen, wobei jedes dieser sogenannten Außenhautelemente (3, 4) jeweils zumindest indirekt gegen eine der Flächen (5, 6) des Mittelkerns (2) angelegt ist, und
- mindestens zwei Gruppen bestehend aus mindestens einem langgestreckten Organ (12), welches zur Bildung einer mechanischen Konstruktion zwischen den Außenhautelementen (3, 4) durch zumindest bestimmte Flachelemente (2 bis 4) der Gruppe von Flachelementen hindurchgehen,
**dadurch GEKENNZEICHNET**, daß
- das Kernelement (2) aus einem Werkstoff besteht, der das Bindemittel nicht absorbiert, wenn sich dieses in seinem im wesentlichen flüssigen Zustand befindet, und
- zum einen die langgestreckten Organe (12) jeweils auf jeder freien Fläche ein sogenanntes Außenhautelement (3, 4) aufweisen, wobei ein Ende (13) mit mindestens einer Abstützeinrichtung (14, 15) zum Abstützen auf der freien Fläche versehen ist, und
- zum anderen bei mindestens zweien dieser langgestreckten Organe (12) in Projektion in eine zu den Flächen der Außenhautelemente (3, 4) senkrechte Ebene deren Längsachsen (12A) sich untereinander schneiden.

2. Platte nach Anspruch 1, bei welcher die langgestreckten Organe jeder Gruppe eine Serie bilden, die sich in einer vorgegebenen Richtung erstreckt, dadurch **gekennzeichnet**, daß die langgestreckten Organe (12) aus mindestens zwei Gruppen (11) jeweils in einer Ebene liegen, die im wesentlichen senkrecht zu den gegenüberliegenden Flächen (5 bis 10) ihrer flachen Elemente (2 bis 4) steht, und so angeordnet sind, daß bei Projektion in eine Mittelebene zu den beiden jeweiligen Gruppen die Längsachsen (12A) der Organe dieser beiden Gruppen (11) sich erkennbar untereinander schneiden.

3. Platte nach einem der Ansprüche 1 oder 2, dadurch **gekennzeichnet**, daß der Werkstoff, aus dem das Kernelement (2) besteht, ein erschöpfbares Material ist, d.h. ein Werkstoff, dessen Kohäsionskraft durch ein geeignetes Mittel modifiziert werden kann, damit es aus dem Mittelkern der Platte nach Verfestigung des Bindemittels herausgezogen werden kann.

4. Platte nach einem der Ansprüche 1 bis 3, dadurch **gekennzeichnet**, daß:
- zum einen jede Platte (1) mindestens eine Vielzahl von Gruppen (11) von schrägverlaufenden Organen (12) aufweist, in denen jeweils die Organe der Gruppe in etwa unter derselben Neigung angeordnet sind, und
- zum anderen diese Gruppen in im wesentlichen parallelen Ebenen organisiert sind, welche in einer vorgegebenen Schritteinheit (e) so beabstandet sind, daß die von den verschiedenen Abstützeinrichtungen (14, 15) der langgestreckten Organe (12) zur Abstützung auf den freien Flächen der Außenhautelemente gebildeten Vorsprünge verteilt sind.

5. Platte nach einem der Ansprüche 1 bis 4, dadurch gekennzeichnet, daß:
- mindestens bestimmte der Organe (12):
. zum einen aus mindestens einer im wesentlichen kontinuierlich verlaufenden Faser gebildet sind, welche so geformt ist, daß sie zur Bildung der Organe (12) so viele Schäfte (18) bilden wie gebogene und geradlinige Segmente (14) vorhanden sind, welche die Abstützeinrichtungen bilden, und
. zum anderen mit einem Bindemittel wie einem warmhärtbaren Kunstharz imprägniert sind, und
- daß die sogenannten Außenhautelemente (3, 4) jeweils aus mindestens einer Matte aus Fasermaterial gebildet sind, welche ebenfalls mit Bindemittel wie einem warmhärtbaren Kunstharz imprägniert ist.

6. Verfahren zur Herstellung einer Platte nach einem der Ansprüche 1 bis 5 und bei welchem nach Auflegen einer Matte aus Fasermaterial gegen jede der beiden gegenüberliegenden Flächen eines sogenannten Mittelkernelements mindestens eine der Gruppen (11) von langgestreckten Organen gebildet wird, wobei nacheinander jedes der Organe (12) ausgebildet wird, und zu diesem Zweck von mindestens einer der freien Flächen des von dem sogenannten Mittelkernelement und den Matten, die es trägt, gebildeten Verbundes aus:
- entsprechend der gewünschten Neigung des betreffenden Organs der Verbund durchbohrt wird,
- in die Durchbohrung mindestens eine Faser eingeführt wird,
- die Teile der Platte mit einem härtbaren Bindemittel imprägniert werden,
- die vorgenannten Arbeitsgänge ohne Abbrechen der Faser entsprechend einer vorgegebenen Schritteinheit so oft wiederholt werden, wie dies zur Bildung der Organe (12) einer Gruppe erforderlich ist,
dadurch **gekennzeichnet,** daß während des Einführens der Faser in jede Durchbohrung die Faser so gebogen wir, daß sie auf der Fläche des Verbundes aus flachen Elementen eine Schleife bildet, die gegenüber jener liegt, von welcher aus die Durchbohrung und die Einführung der Faser vorgenommen wird.

7. Verfahren nach Anspruch 6, dadurch **gekennzeichnet**, daß nach Bildung aller Organe mindestens einer Gruppe die freien Flächen des so ausgebildeten Verbundes mit einem Bindemittel wie einem Kunstharz beschichtet werden, das man zum Platteninneren hin so fließen läßt, daß die schrägen Organe (12) beschichtet werden.

8. Verfahren nach Anspruch 6 oder 7, dadurch **gekennzeichnet**, daß jede auf einer der freien Flächen des Verbundes von flachen Elementen gebildete Schleife unter Ausführung einer relativen Festlegung zwischen dieser Schleife und mindestens einer in Höhe der Schleife liegenden Faser festgelegt wird.

9. Verfahren nach Anspruch 7 oder 8, dadurch **gekennzeichnet,** daß vor dem Aushärten des Bindemittels die Platte in der Weise verformt wird, daß sie eine vorgegebene Form erhält, die bis zum Aushärten des Bindemittels aufrechterhalten wird.

10. Verfahren nach einem der Ansprüche 7 bis 9, dadurch **gekennzeichnet,** daß bei Ende der Aushärtung des Bindemittels das Kernmaterial unter Ausnutzung seiner sogenannten Erschöpfungseigenschaften herausgezogen wird.

## Claims

1. A panel (1) constituted by assembling different parts on one another by means of a settable bonding material which is in a substantially fluid state at least at a given moment during assembly of the parts, the parts comprising:
- at least three substantially flat elements (2, 3, 4), one element (2) being called the central core and comprising two opposing surfaces (5, 6) which determine its thickness (El), and two elements (3, 4) being called skin elements, both with two opposing surfaces (7, 8 and 9, 10) determining their thickness (E2, E3), each flat, so-called skin element (3, 4) being applied at least indirectly against one of the surfaces (5, 6) of the central core (2), and
- at least two groups of at least one elongate member (12), at least some of which pass through the assembly of flat elements (2 to 4) in order to produce a mechanical structure between the skin elements (3, 4),
the panel being characterised in that:
- the core element (2) is made from a material that does not absorb the bonding material when the bonding material is in the substantially fluid state, and
- on the one hand, the elongate members (12) each have, on each free surface of a so-called skin element (3, 4), an end (13) provided with at least one means (14, 15) for bearing on the free surface, and,
- on the other hand, the longitudinal axes (12A) of at least two of the elongate members (12), projected onto a plane perpendicular to the surfaces of the skin elements (3, 4), intersect one another.

2. A panel according to claim 1 in which the members of each group constitute a series extending in a given direction, characterised in that the elongate members (12) of at least two groups (11) are each located in a plane substantially perpendicular to the opposing surfaces (5 to 10) of their flat elements (2 to 4) and are arranged such that, when projected onto a median plane between the two groups under consideration, the longitudinal axes (12A) of the members (12) of the two groups (11) appear to intersect.

3. A panel according to any one of claims 1 and 2,
characterised in that the material constituting the core element (2) is a withdrawable material, i.e. a material whose cohesion may be modified by appropriate means so that it can be extracted from the central core of the panel after the bonding material has solidified.

4. A panel according to any one of claims 1 to 3, characterised in that:
- on the one hand, each panel (1) comprises at least one plurality of groups (11) of oblique members (12), in each of which the members of the group are arranged approximately at the same angle of inclination, and,
- on the other hand, the groups are arranged in substantially parallel planes and spaced at a given interval (e) so as to disperse the protrusions constituted by the different bearing means (14, 15) of the elongate members (12) on the free surfaces of the skin elements.

5. A panel according to any one of claims 1 to 4, characterised in that:
- at least some of the members (12):
. on the one hand, are constituted from at least one substantially continuous fibre which is shaped to produce both the rods (18) forming the members (12) and the curved (14) and straight (15) segments constituting the bearing means (14, 15), and,
. on the other hand, are impregnated with a bonding material such as a thermosetting resin, and
- the so-called skin elements (3, 4) are each constituted by at least one layer of fibrous material, which is also impregnated with a bonding material such as a thermosetting resin.

6. A method of producing a panel according to any one of claims 1 to 5 and according to which, after a layer of fibrous material has been applied to both of the two opposing surfaces of a so-called central core element, at least one of the groups (11) of elongate members is constituted by producing each of the members (12) in succession and, to this end, once at least one of the free surfaces of the assembly has been constituted by the so-called central core element and the layers supported thereupon:
- the assembly is perforated at the desired angle of inclination for the member under consideration,
- at least one fibre is introduced into the perforation,
- without breaking the fibre, the above operations are reproduced at given intervals as many times as is necessary to constitute the members (12) of a group,
- the parts of the panel are impregnated with a settable bonding material,
the method being characterised in that, when the fibre is introduced into each perforation, it is folded so as to constitute a loop on the surface of the assembly of flat elements opposite the surface from which the perforation was made and the fibre was introduced.

7. A method according to claim 6, characterised in that, once all the members of at least one group have been constituted, the free surfaces of the assembly thus arranged are coated with a bonding material such as a resin which is caused to flow to the inside of the panel so as to coat the oblique members (12).

8. A method according to claim 6 or 7, characterised in that each loop formed on one of the free surfaces of the assembly of flat elements is locked by locking the loop relative to at least one fibre located at the same level as the loop.

9. A method according to claim 7 or 8, characterised in that, before the bonding material has set, the panel is deformed so as to give it a pre-determined shape which is maintained until the bonding material sets.

10. A method according to any one of claims 7 to 9,
characterised in that, once the bonding material has set, the core material is extracted by exploiting its so-called withdrawable nature.
